# EUROPEAN PATENT SPECIFICATION

(11) **EP 0 481 823 B1**
(45) Date of publication and mention of the grant of the patent: **12.04.1995**
(21) Application number: 91309676.4
(22) Date of filing: 18.10.1991
(51) Int. Cl.: G01J 3/44

(54) **Fluorescence measurement apparatus**
Fluoreszenzmessgerät
Appareil de mesure de fluorescence

(30) Priority: 19.10.1990 JP 283116/90
(43) Date of publication of application: 22.04.1992
(73) Proprietor: SHIMADZU CORPORATION, Nakagyo-ku Kyoto-shi Kyoto 604 (JP)
(72) Inventor: Hayashi, Tsutomu, Ukyo-ku, Kyoto-city 615 (JP)
(74) Representative: Cotter, Ivan John

(56) References cited:
- EP-A- 0 330 183
- GB-A- 2 024 412
- PATENT ABSTRACTS OF JAPAN, vol. 13, no. 50 (P-823)(3398) 6 February 1989 & JP-A-63243842
- INTERNATIONAL LABORATORY, vol. 16, no. 7, September 1986, Fairfield, CT, US, pages 68-74; T. Iwata et al: "Computer-enhanced fluorescence spectroscopy"

## Description

This invention relates to fluorescence measurement apparatus for analysing a sample by measuring fluorescent light emitted from the sample.

Two methods of using a fluorescence measurement for analysing a sample have been proposed. One is so-called excitation spectrum measurement in which the wavelength of excitation light irradiating the sample is changed and a corresponding change in the strength of fluorescent light of a fixed wavelength emitted from the sample is measured. The other is so-called emission spectrum measurement in which a sample is irradiated by monochromatic excitation light of a fixed wavelength and the spectrum of fluorescent light emitted from the sample is scanned (i.e. the strength at every wavelength of the spectrum is measured). The present invention can be applied to both of these two methods.

It has been proposed that automatic full scale setting employed in recording a spectrum curve obtained by fluorescence measurement be effected such that the largest of data representing the spectrum (i.e. the maximum height of the spectrum curve) is recorded within the full scale range of a recorder. If such automatic full scale setting is used in a fluorescence measurement apparatus, the following problem arises.

In the emission spectrum measurement method, a peak caused by Rayleigh scattering appears in the spectrum at the same wavelength as the monochromatic excitation light, and the height of the Rayleigh peak is in many cases greater than those of the peaks of the fluorescent light from the sample. Thus, the full scale of the spectrum recorder is automatically determined by the Rayleigh peak and the peaks of the fluorescent light from the sample are recorded at low level, which makes it difficult to determine their exact heights. In the excitation spectrum measurement method, the Rayleigh peak also is high when the wavelength of the excitation light comes to the measurement wavelength. In this case also, the strong Rayleigh peak determines the full scale of the spectrum recorder and makes exact measurement of the comparatively faint fluorescent light difficult.

UK Patent Application No. GB-A-2 024 412 discloses a system for setting one of an excitation and emission (fluorescence) monochromator to an optimum wavelength by arbitrarily fixing the wavelength of, for example, the excitation monochromator and scanning through a range of wavelengths in the emission monochromator to detect a peak in intensity. The emission monochromator is then set to the peak wavelength as the optimum wavelength, and spectrum measurement commences by scanning the wavelength of the excitation monochromator. During the optimum wavelength detection stage, the detected intensity when the excitation and emission side wavelengths are equal (which corresponds to the Rayleigh peak) is prevented from being stored in the memory. At the recording stage the peak value of data stored in the memory is used to set the full scale of the recorder.

European Patent Application No. EP-A-0 330 183 discloses a system for setting the optimum wavelength for operation of an emission or excitation monochromator in fluorescence measurement apparatus. To determine the optimum wavelength for operation of, for example, the excitation monochromator, the wavelength of the emission monochromator set at an arbitrary wavelength and the excitation monochromator is scanned to determine the wavelength at which peak intensity is obtained. It is proposed that, to avoid a Rayleigh direct scattering or diffraction peak, or a Raman peak, being detected as the optimum setting, scanning is performed twice at slightly different fixed wavelengths and the maximum peak at substantially the same wavelength in both spectra is selected as the optimum. There is no disclosure of how the unwanted peaks may be prevented from influencing the apparatus during a measurement stage.

According to one aspect of the invention there is provided a fluorescence measurement apparatus for recording a spectrum curve of fluorescent light emitted from a sample while the sample is irradiated by excitation light of a fixed wavelength, the fluorescence measurement apparatus comprising:
excitation light generating means for generating light at a fixed wavelength;
emitted light detector means;
control means for controlling the emitted light detecting means to scan over a range of wavelengths from the fixed wavelength to longer wavelengths;
a memory for storing data of the spectrum curve; and
a recorder for recording the spectrum curve;
characterised in that the control means is operative: to analyse the stored data to detect data corresponding to peaks in the spectrum curve about the said fixed wavelength and integral multiples thereof and data corresponding to minima of the spectrum curve adjacent the said peaks; to detect the maximum value of the stored data, disregarding data between the peak about the fixed wavelength and the first minimum after the fixed wavelength (λ0) and data from the detected nearest minimum before each peak about a multiple of the fixed wavelength to the detected nearest minimum after that peak; and to set the full scale of the recorder based on the detected maximum value.

According to another aspect of the invention there is provided a fluorescence measurement apparatus for recording a spectrum curve of fluorescent light of a fixed wavelength emitted from a sample while the sample is irradiated by excitation light, the fluorescence measurement apparatus comprising:
excitation light generating means;
emitted light detector means for detecting emitted light at a fixed wavelength;
control means for controlling the excitation light generating means to scan over a range of wavelengths from the fixed wavelength to shorter wavelengths;
a memory for storing data of the spectrum curve; and
a recorder for recording the spectrum curve;
characterised in that the control means is operative: to analyse the stored data to detect data corresponding to peaks in the spectrum curve about the said fixed wavelength and integral sub-multiples thereof and data corresponding to minima of the spectrum curve adjacent the said peaks; to detect the maximum value of the stored data, disregarding data between the peak about the fixed wavelength and the first minimum after the fixed wavelength (λ0) and data from the detected nearest minimum before each peak about a sub-multiple of the fixed wavelength to the detected nearest minimum after that peak; and to set the full scale of the recorder based on the detected maximum value.

A fluorescence measurement apparatus embodying the present invention can be an excitation spectrum measurement apparatus or an emission spectrum measurement apparatus; and the invention may be embodied to provide an apparatus that will work in both an excitation spectrum measurement mode and an emission spectrum measurement mode.

As described above, the peaks due to the Rayleigh scattering etc. of the excitation light are in most cases of higher level than the peaks due to the fluorescent light from the sample in the spectrum curve, but such peaks need not be recorded by the recorder. The full scale setting means of embodiments of the invention described below, which means is in its form of a controller, disregards such peaks in determining the full scale of the recorder, whereby the peaks of the fluorescent light from the sample are recorded at a higher level in the recorder, whereby the accuracy of the sample analysis is improved. Since Rayleigh scattering is caused by scattering of the excitation light in the sample, the wavelength of the light generated by the Rayleigh scattering (which light is hereinafter referred to as the Rayleigh scattered light) is the same as that of the excitation light, which is known. Thus, it is easy to detect the Rayleigh peak.

When a diffraction grating is used for monochromators of the apparatus, higher order diffractions of the basic Rayleigh scattered light are generated. In this case, peaks of the higher order diffractions also appear at the double, triple and further integral multiples of the wavelength of the basic Rayleigh scattered light in the spectrum curve. In the case of the excitation spectrum measurement method, the peaks due to the higher diffractions appear at shorter wavelengths such as 1/2, 1/3, etc. which are sub-multiples of the wavelength of the basic Rayleigh scattered light in the measured spectrum.

In accordance with the invention, data corresponding to peaks due to the basic Rayleigh scattered light, and higher order diffractions, are disregarded in setting the full scale of the recorder. In some embodiments, data corresponding to Raman peaks may also be disregarded as will be explained below.

The invention will now be further described, by way of illustrative and non-limiting example, with reference to the accompanying drawings, in which:
Figure 1 is a schematic diagram of a fluorescence sample analyser according to an embodiment of the invention;
Figure 2 is a flow chart of an automatic full scale setting operation performed when the analyser is in an emission spectrum measurement mode;
Figure 3 is a flow chart of an automatic full scale setting operation performed when the analyser is in an excitation spectrum measurement mode;
Figure 4 is an original spectrum curve obtained during operation of the analyser in the emission spectrum measurement mode;
Figure 5 is a spectrum curve recorded on a recorder of the analyser; and
Figure 6 depicts graphs showing how a Raman peak appears.

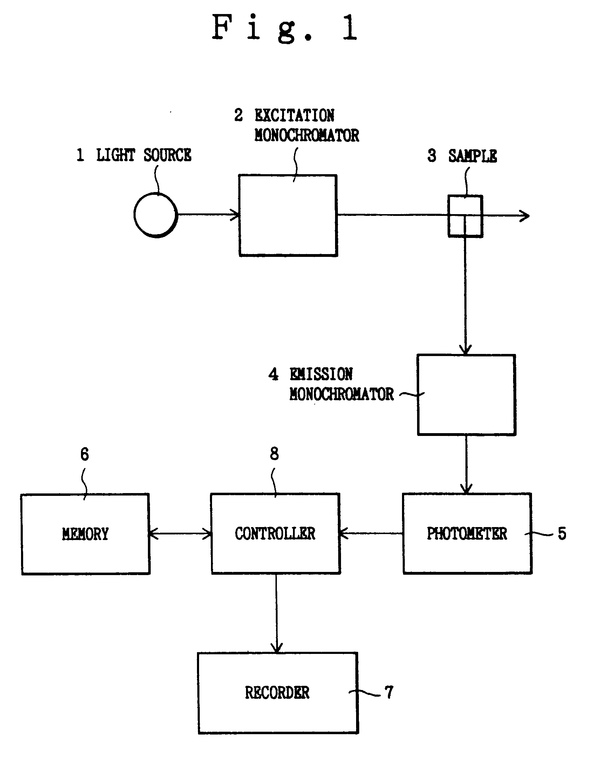

A fluorescence sample analyser according to an embodiment of the invention is shown schematically in Figure 1. The fluorescence sample analyser includes a controller 8 which comprises a microcomputer and which operates the fluorescence sample analyser in either of two modes each corresponding to a respective one of the two methods described above, that is an emission spectrum measurement mode and an excitation spectrum measurement mode.

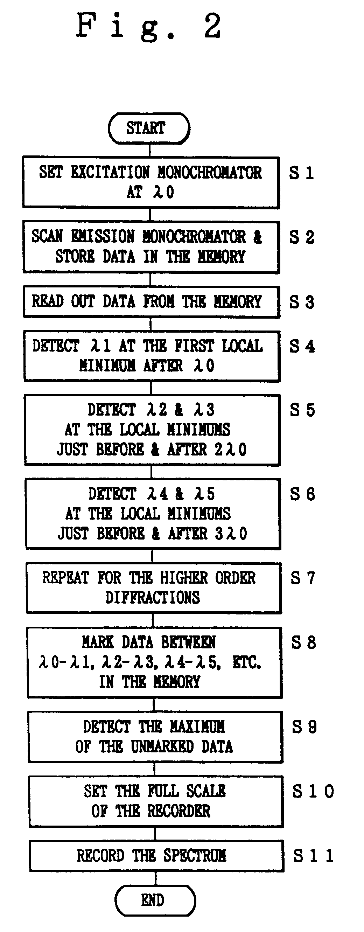

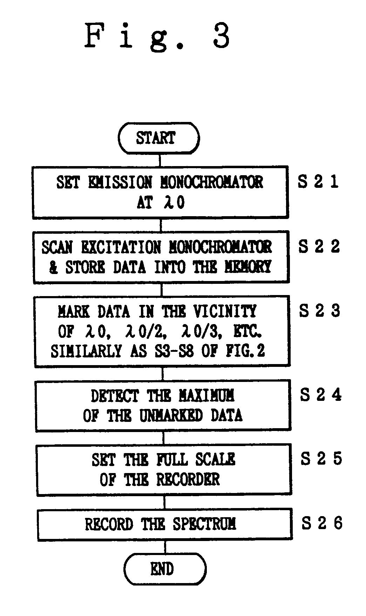

The operation of the controller 8 for the case when the analyser is in the emission spectrum measurement mode will first be described with reference to a flow chart shown in Figure 2. First, the wavelength of an excitation monochromator 2 is set at an appropriate value λ0 (step S1), and a light source 1 is turned on. Light from the light source 1 is monochromated by the excitation monochromator 2, and the resultant monochromatic light having the wavelength λ0 irradiates a sample 3. When irradiated by that light, the sample 3 emits fluorescent light having a spectrum of a certain shape.

An emission monochromator 4 passes at any one time monochromatic light having a wavelength λ from the fluorescent light emitted from the sample 3, and the wavelength λ is changed (the emission monochromator 4 is scanned) starting from the wavelength of the excitation light λ0 and going towards longer wavelengths. The strength of the monochromatic light selected by the emission monochromator 4 is measured by a photometer 5, and the value measured at every wavelength is stored in a memory 6 by the controller 8 (step S2).

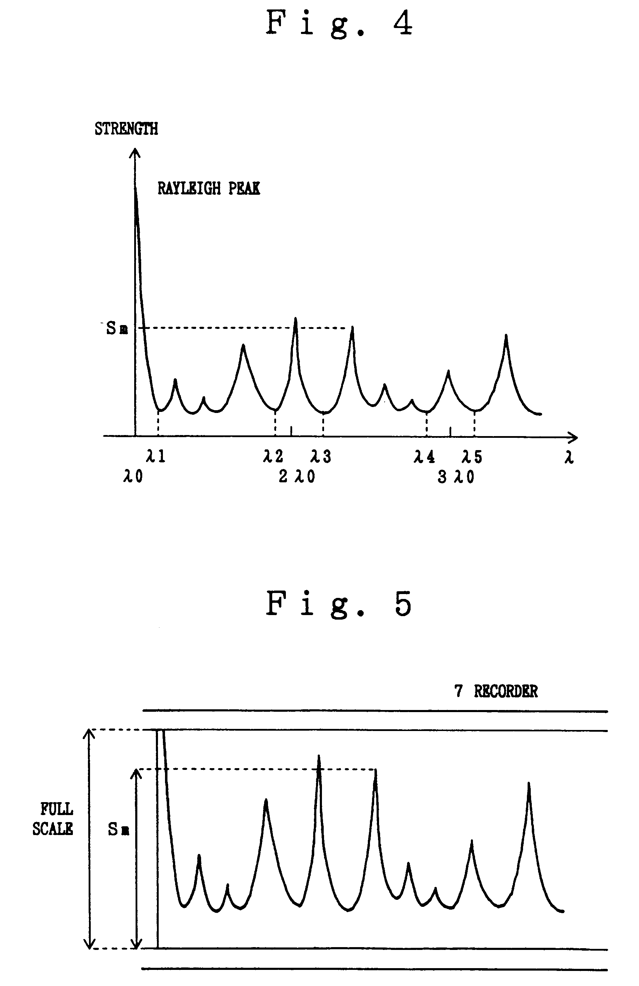

Here, Rayleigh scattered light, as well as the fluorescent light, enters into the mission monochromator 4, giving rise to a peak at the starting point λ0. Peaks of higher order diffractions of the Rayleigh scattered light having the wavelengths 2. λ0, 3.λ0, etc., also appear in the spectrum, as is shown in Figure 4.

The data stored in the memory 6 is then read out sequentially, starting from the wavelength λ0 (step S3), and the wavelength λ1 at the first local minimum after the wavelength λ0 is detected (step S4). Next, the wavelengths λ2 and λ3 at the local minima respectively just before and just after the second order diffraction (having the wavelength 2.λ0) of the Rayleigh scattered light are detected (step S5). Further, wavelengths λ4 and λ5 at the local minima respectively just before and just after the third order diffraction (having the wavelength 3.λ0) are detected (step S6), and a similar operation is continued for higher order diffractions if such peaks exist (step S7).

When such wavelengths λ1, λ2, λ3, etc. have been determined (up to the step S7), data between λ0 to λ1, data between λ2 to λ3, etc. in the data stored in the memory 6 are marked (step S8). The marking is made to enable later disregarding of the peaks of the Rayleigh scattered light and its higher order diffractions from the data in the memory 6. Since data between the neighbouring local minima are marked for disregarding, the number of disregarded data is confined to a minimum, and the recognisable peaks of the fluorescent light from the sample are not lost.

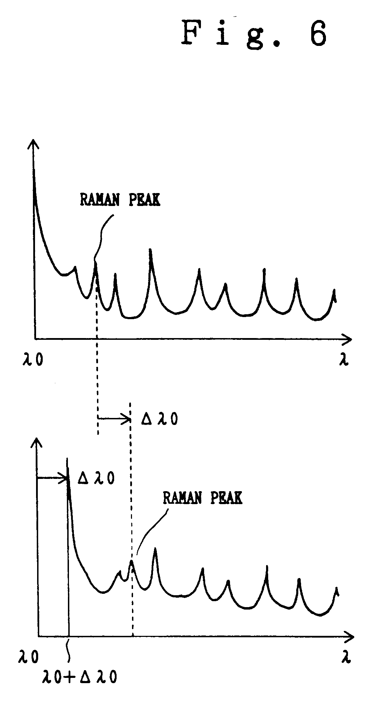

After that, the maximum Sm of the unmarked data in the memory 6 is detected (step S9), and the maximum value Sm is used to set the full scale of a recorder 7 (step S10). It is preferable to set the full scale of the recorder 7 so that the maximum value Sm is about 70% of the full scale. When the automatic cull scale setting of the recorder 7 is finished, the data in the memory 6 (including the data disregarded in determining the full scale) are sent to the recorder 7, whereby the measured data is recorded on the recorder 7 as a spectrum (step S11), as shown in Figure 5.

Thus, in the above-described embodiment, the peaks of the diffractions of the Rayleigh scattered light are disregarded as well as the basic Rayleigh scattered light.

Operation of the fluorescence sample analyser in the excitation spectrum measurement mode will now be described with reference to a flow chart shown in Figure 3. First, the emission monochromator 4 is set at an appropriate wavelength λ0 (step S21). Then, the excitation monochromator 2 is scanned, starting from the wavelength λ0 and going towards shorter wavelengths, and the strength of the monochromatic light at every wavelength is measured and stored in the memory 6 (step S22). In this case, the photometer 5 receives the Rayleigh scattered light and the second, third and higher order diffractions of excitation light having shorter wavelengths such as (1/2).λ0 and (1/3).λ0, etc. which are diffracted by the emission monochromator 4 set at the wavelength λ0.

Since peaks of these light components appear in the measured spectrum, an operation similar to that of the steps S3 to S8 of Figure 2 can be performed to mark data in the vicinity of the wavelengths λ0, (1/2).λ0, (1/3).λ0, etc. in the spectrum curve (step S23). Then, similarly to the steps S9 to S11 of Figure 2, the maximum of the unmarked data in the memory 6 is detected (step S24), the full scale of the recorder 7 is determined (S25), and the measured data stored in the memory 6 are recorded by the recorder 7 (step S26).

In the emission spectrum measurement mode, light due to the Raman effect (which light is hereinafter referred to as the Raman light) from the sample is in some cases stronger than the fluorescent light of the sample. In that case, the full scale of the spectrum recording would be determined by the peak of the Raman light in the operation of Figure 2. This would be undesirable because it would adversely affect exact measurement of the fluorescent light from the sample in that the full scale setting of the recorder would be based on the Raman peak rather than on the maximum value of the fluorescent light from the sample. This problem can be avoided as follows.

Since the peak of the Raman light appears after the excitation light with a distance proper to the sample, the peak of the Raman light can be detected as follows. Referring to Figure 6, the excitation monochromatic light is slightly changed from the fixed wavelength λ0 to another wavelength λ0 + Δλ0 and the spectrum is measured by the emission monochromator 4. When the two spectrum curves corresponding to the excitation light of λ0 and that of λ0 + Δλ0 are compared, the peak that shifts along with the change in the excitation monochromatic light Δλ0 is determined to be the Raman peak.

These operations can be included in the automatic full scale setting operation of figure 2. That is, if the highest peak determined at the step S9 is suspected to be due to the Raman light, the operation described above (i.e. the spectrum being measured again with the excitation light slightly changed) is performed by the controller 8 to decide whether the peak is actually due to the Raman light or not. When it is decided that the highest peak determined at the step S9 is due to the Raman light, the data in the vicinity of the Raman peak in the memory 6 are further marked, using the same method as in the steps S5 to S8, and the full scale of the spectrum recorder 7 is determined based on the maximum value of the unmarked data.

## Claims

1. A fluorescence measurement apparatus for recording a spectrum curve of fluorescent light emitted from a sample while the sample is irradiated by excitation light of a fixed wavelength (λ0), the fluorescence measurement apparatus comprising:
excitation light generating means (1, 2) for generating light at a fixed wavelength (λ0);
emitted light detector means (4, 5);
control means (8) for controlling the emitted light detecting means (4, 5) to scan over a range of wavelengths from the fixed wavelength (λ0) to longer wavelengths;
a memory (6) for storing data of the spectrum curve; and
a recorder (7) for recording the spectrum curve;
characterised in that the control means (8) is operative: to analyse the stored data to detect data corresponding to peaks in the spectrum curve about the said fixed wavelength (λ0) and integral multiples thereof and data corresponding to minima of the spectrum curve adjacent the said peaks; to detect the maximum value (Sₘ) of the stored data, disregarding data between the peak about the fixed wavelength (λ0) and the first minimum after the fixed wavelength (λ0) and data from the detected nearest minimum before each peak about a multiple of the fixed wavelength (λ0) to the detected nearest minimum after that peak; and to set the full scale of the recorder (7) based on the detected maximum value (Sₘ).

2. A fluorescence measurement apparatus for recording a spectrum curve of fluorescent light of a fixed wavelength (λ0) emitted from a sample while the sample is irradiated by excitation light, the fluorescence measurement apparatus comprising:
excitation light generating means (1, 2);
emitted light detector means (4, 5) for detecting emitted light at a fixed wavelength (λ0);
control means (8) for controlling the excitation light generating means (1, 2) to scan over a range of wavelengths from the fixed wavelength (λ0) to shorter wavelengths;
a memory (6) for storing data of the spectrum curve; and
a recorder (7) for recording the spectrum curve;
characterised in that the control means (8) is operative: to analyse the stored data to detect data corresponding to peaks in the spectrum curve about the said fixed wavelength (λ0) and integral sub-multiples thereof and data corresponding to minima of the spectrum curve adjacent the said peaks; to detect the maximum value (Sₘ) of the stored data, disregarding data between the peak about the fixed wavelength (λ0) and the first minimum after the fixed wavelength (λ0) and data from the detected nearest minimum before each peak about a sub-multiple of the fixed wavelength (λ0) to the detected nearest minimum after that peak; and to set the full scale of the recorder (7) based on the detected maximum value (Sₘ).

3. Apparatus according to claim 1 or claim 2, wherein the control means (8) is further operative to detect data corresponding to a Raman effect peak in the spectrum curve and data corresponding to minima adjacent the Raman effect peak, and to detect the maximum value (Sₘ) of the stored data disregarding data between the minima adjacent the Raman effect peak.

4. Apparatus according to any preceding claim, wherein the control means (8) is operative to mark the stored data to be disregarded, and to detect the maximum value (Sₘ) of the unmarked data.

## Patentansprüche

1. Fluoreszenzmeßvorrichtung zum Aufzeichnen einer Spektralkurve des Fluoreszenzlichtes, das von einer Probe ausgesandt wird, während die Probe mit einem Anregungslicht einer festen Wellenlänge (λ0) bestrahlt wird, welche Fluoreszenzmeßvorrichtung
eine Anregungslichtgeneratoreinrichtung (1, 2) zum Erzeugen von Licht mit der festen Wellenlänge (λ0),
eine Emissionslichtdetektoreinrichtung (4, 5),
eine Steuereinrichtung (8) zum Steuern der Emissionslichtdetektoreinrichtung (4, 5), um über einen Bereich von Wellenlängen von der festen Wellenlänge (λ0) zu längeren Wellenlängen abzutasten,
einen Speicher (6) zum Speichern der Daten der Spektralkurve und
ein Aufzeichnungsgerät (7) zum Aufzeichnen der Spektralkurve umfaßt,
dadurch gekennzeichnet, daß die Steuereinrichtung so arbeitet, daß sie die gespeicherten Daten analysiert, um die Daten, die den Spitzenwerten in der Spektralkurve um die feste Wellenlänge (λ0) und um ganzzahlige Vielfache davon entsprechen, und die Daten zu erfassen, die den Minima der Spektralkurve neben diesen Spitzenwerten entsprechen, den Maximalwert (Sm) der gespeicherten Daten erfaßt, wobei die Daten zwischen dem Spitzenwert um die feste Wellenlänge (λ0) und das erste Minimum nach der festen Wellenlänge (λ0) und die Daten von dem erfaßten nahesten Minimum vor jedem Spitzenwert um ein Vielfaches der festen Wellenlänge (λ0) bis zum erfaßten nahesten Minimum nach diesem Spitzenwert unberücksichtigt bleiben, und den vollen Skalenwert des Aufzeichnungsgerätes (7) auf der Grundlage des erfaßten Maximalwertes (Sm) festlegt.

2. Fluoreszenzmeßvorrichtung zum Aufzeichnen einer Spektralkurve des Fluoreszenzlichtes mit einer festen Wellenlänge (λ0), das von einer Probe ausgesandt wird, während die Probe mit einem Anregungslicht bestrahlt wird, welche Fluoreszenzmeßvorrichtung
eine Anregungslichtgeneratoreinrichtung (1, 2),
eine Emissionslichtdetektoreinrichtung (4, 5) zum Erfassen des ausgesandten Lichtes mit einer festen Wellenlänge (λ0), eine Steuereinrichtung (8) zum Steuern der Anregungslichtgeneratoreinrichtung (1, 2), um über einen Bereich von Wellenlängen von der festen Wellenlänge (λ0) zu kürzeren Wellenlängen abzutasten,
einen Speicher (6) zum Speichern der Daten der Spektralkurve und
ein Aufzeichnungsgerät (7) zum Aufzeichnen der Spektralkurve umfaßt,
dadurch gekennzeichnet, daß die Steuereinrichtung (8) so arbeitet, daß sie die gespeicherten Daten analysiert, um Daten, die den Spitzenwerten in der Spektralkurve um die feste Wellenlänge (λ0) und um ganzzahlige Teilwerte davon entsprechen, und Daten zu erfassen, die den Minima der Spektralkurve neben diesen Spitzenwerten entsprechen, den Maximalwert (Sm) der gespeicherten Daten erfaßt, wobei die Daten zwischen dem Spitzenwert um die feste Wellenlänge (λ0) und dem ersten Minimum nach der festen Wellenlänge (λ0) und die Daten von dem erfaßten nahesten Minimum vor jedem Spitzenwert um einen Teilwert der festen Wellenlänge (λ0) bis zum erfaßten nahesten Minimum nach dem Spitzenwert unberücksichtigt bleiben, und den vollen Skalenwert des Aufzeichnungsgerätes (7) auf der Grundlage des erfaßten Maximalwertes (Sm) festlegt.

3. Vorrichtung nach Anspruch 1 oder Anspruch 2, bei der die Steuereinrichtung (8) weiterhin so arbeitet, daß sie Daten, die einem Raman-Spitzenwert in der Spektralkurve entsprechen, und Daten erfaßt, die Minima neben dem Raman-Spitzenwert entsprechen, und den Maximalwert (Sm) der gespeicherten Daten erfaßt, wobei die Daten zwischen den Minima neben dem Raman-Spitzenwert unberücksichtigt bleibt.

4. Vorrichtung nach einem vorhergehenden Anspruch, bei der die Steuereinrichtung (8) so arbeitet, daß sie die nicht zu berücksichtigenden gespeicherten Daten markiert und den Maximalwert (Sm) der nicht markierten Daten erfaßt.

## Revendications

1. Appareil de mesure de fluorescence pour enregistrer une courbe de spectre de lumière fluorescente émise par un échantillon lorsque l'échantillon est éclairé par de la lumière d'excitation d'une longueur d'onde fixe (λ0), l'appareil de mesure de fluorescence comprenant :
un moyen générateur de lumière d'excitation (1, 2) pour produire de la lumière à une longueur d'onde fixe (λ0) ;
un moyen détecteur de lumière émise (4, 5) ;
un moyen de commande (8) pour commander le moyen détecteur de lumière émise (4, 5) pour balayer une plage de longueurs d'onde partant de la longueur d'onde fixe (λ0) vers des longueurs d'onde plus grandes ;
une mémoire (6) pour mémoriser les données de la courbe de spectre ; et
un enregistreur (7) pour enregistrer la courbe de spectre ;
caractérisé en ce que le moyen de commande (8) sert : à analyser les données mémorisées pour détecter des données correspondant à des pics de la courbe de spectre voisins de ladite longueur d'onde fixe (λ0) et de multiples entiers de celle-ci, et des données correspondant à des minima de la courbe de spectre adjacents auxdits pics ; à détecter la valeur maximale (Sₘ) des données mémorisées, en éliminant les données situées entre le pic voisin de la longueur d'onde fixe (λ0) et le premier minimum après la longueur d'onde fixe (λ0) et les données allant du minimum le plus proche détecté avant chaque pic voisin d'un multiple de la longueur d'onde fixe (λ0) au minimum le plus proche détecté après ce pic ; et à régler la déviation totale de l'enregistreur (7) en se basant sur la valeur maximale détectée (Sₘ).

2. Appareil de mesure de fluorescence pour enregistrer une courbe de spectre de lumière fluorescente d'une longueur d'onde fixe (λ0) émise par un échantillon lorsque l'échantillon est éclairé par de la lumière d'excitation, l'appareil de mesure de fluorescence comprenant :
un moyen générateur de lumière d'excitation (1, 2) ;
un moyen détecteur de lumière émise (4, 5) pour détecter la lumière émise à une longueur d'onde fixe (λ0) ;
un moyen de commande (8) pour commander le moyen générateur de lumière d'excitation (1, 2) pour balayer une plage de longueurs d'onde partant de la longueur d'onde fixe (λ0) vers des longueurs d'onde plus petites ;
une mémoire (6) pour mémoriser les données de la courbe de spectre ; et
un enregistreur (7) pour enregistrer la courbe de spectre ;
caractérisé en ce que le moyen de commande (8) sert : à analyser les données mémorisées pour détecter des données correspondant à des pics de la courbe de spectre voisins de ladite longueur d'onde fixe (λ0) et de sous-multiples entiers de celle-ci, et des données correspondant à des minima de la courbe de spectre adjacents auxdits pics ; à détecter la valeur maximale (Sₘ) des données mémorisées , en éliminant les données situées entre le pic voisin de la longueur d'onde fixe (λ0) et le premier minimum après la longueur d'onde fixe (λ0) et les données allant du minimum le plus proche détecté avant chaque pic voisin d'un sous-multiple de la longueur d'onde fixe (λ0) au minimum le plus proche détecté après ce pic ; et à régler la déviation totale de l'enregistreur (7) en se basant sur la valeur maximale détectée (Sₘ).

3. Appareil selon la revendication 1, ou la revendication 2, dans lequel le moyen de commande (8) sert en outre à détecter des données correspondant à un pic à effet de Raman dans la courbe de spectre et des données correspondant à des minima adjacents au pic à effet de Raman, et à détecter la valeur maximale (Sₘ) des données mémorisées en éliminant les données entre les minima adjacents au pic à effet de Raman.

4. Appareil selon l'une quelconque des revendications précédentes, dans lequel le moyen de commande (8) sert à marquer les données mémorisées qui sont à éliminer, et à détecter la valeur maximale (Sₘ) des données non marquées.
